# EUROPEAN PATENT SPECIFICATION

(11) **EP 1 519 526 B1**
(45) Date of publication and mention of the grant of the patent: **24.05.2006**
(21) Application number: 04255474.1
(22) Date of filing: 09.09.2004
(51) Int. Cl.: H04L 12/58, H04Q 7/22, H04L 29/06

(54) **Unified messaging server and method integrating multimedia messaging service functions and legacy handsets**
Einheitlicher Benachrichtungsserver und Verfahren zur Integration von Funktionen von multimedialen Nachrichtendiensten in bestehenden Handgeräten
Serveur de messagerie unifié et procédé pour intégrer des fonctions de service de messagerie multimédia dans des combinés existantes

(30) Priority: 22.09.2003 US 667537
(43) Date of publication of application: 30.03.2005
(73) Proprietor: LUCENT TECHNOLOGIES INC., Murray Hill, New Jersey 07974-0636 (US)
(72) Inventor: Heck, John F., Wheaton, Illinois 60187 (US); Woodland, Lee, Wantage, Oxon OX12 9XR (GB)
(74) Representative: Sarup, David Alexander

(56) References cited:
- EP-A1- 1 432 219
- EP-A2- 1 139 677
- WO-A2-99/66746
- WO-A2-02/063838
- WO-A2-20/04095422
- US-A1- 2003 040 300

## Description

### Background

The present invention is generally directed to messaging services and is more specifically directed to voice messages originated by and/or delivered to wireless handsets. As used herein, "wireless handsets" refer to portable, wireless communication devices by which subscribers can transmit and/or receive messages including support for voice communications.

Multimedia messaging services (MMS) are currently available in the United States and Internationally to subscribers utilizing multimedia enabled handsets, e.g. handsets complying with 2.5G (so-called second and one-half generation) and 3G technology. MMS enabled handsets support the delivery and display of multimedia content that may include color graphics, sound, text, pictures, video, and animation. For example, a subscriber can use a MMS handset to take a picture of the subscriber's new car and transmit the picture along with a voice message to another subscriber with a MMS enabled handset that displays the picture and reproduces the voice message over the speaker of the handset. Such capabilities open the door to a variety of applications.

Several telecommunication network elements are utilized to provide MMS service. A MMS center (MMSC) acts as an application router responsible for receiving and transmitting MM (multimedia) messages, temporarily stores the MM messages, and notifies recipients of MM messages waiting to be delivered. OMA/WAP (open mobile alliance /wireless application protocol) proxy gateways receive and transmit multimedia messages between the service providers' IP network and the wireless access network. Push proxy gateways perform protocol conversions between MM messages and SMS messages so that notification of a MM message held in temporary storage waiting delivery can be sent to the subscriber by transmission of an SMS message. Conventional SMS servers are used to deliver notification to a MMS handset that a MM message is waiting to be delivered to the handset.

Multimedia messaging services are not provided on a real-time basis, but are based on a store and forward messaging approach. This is different from conventional circuit switched communications that operate on real-time transmission of information. It is likewise different from packet based wireless voice communications where it is desirable to minimize any delays associated with the delivery of packets in order to minimize any latency in the communications.

Difficulties arise when communications are desired between a subscriber with a MMS enabled handset and a subscriber using a handset that is not MMS enabled, e.g. a legacy TUI (telephone user interface) handset. Current MMS service offerings allow multimedia messages to be sent to other MMS recipients on the same service provider's network or to an e-mail address. Some MMS enabled handsets are able to operate in a conventional cellular telephone mode and can be utilized to make conventional voice calls to other cellular subscribers including subscribers utilizing legacy handsets. However, the transmission of multimedia messages to legacy handsets is not supported. For example, a voicemail message from a MMS subscriber attempted to be transmitted as a multimedia message to a subscriber utilizing a legacy handset will not be delivered.

Since MMS operates in a store and forward mode, an MMS message will temporarily be held in storage by the MMS server awaiting the delivery of the message to the intended recipient. If the recipient is not available or chooses not to retrieve a stored message, the MMS server will automatically delete any stored messages after a relatively short predetermined amount of time, e.g. 24 hours. This is done in order to conserve resources, especially to limit the maximum amount of data (messages) that must be stored. This differs from conventional voicemail services were voicemail messages are stored in a subscriber's mailbox for an indefinite amount of time, that is, the voicemail system does not normally attempt to delete messages just because a message has been stored in a mailbox for a substantial number of days or weeks.

Voicemail messages stored in a conventional voicemail system such as an AnyPath Unified Messaging System available from Lucent Technologies Inc. are normally not accessible by a subscriber utilizing a handset in the MMS mode. Thus, although the MMS subscriber can obtain MM messages that are temporarily stored by the MMS server, a subscriber is required to utilize a different communication mode/equipment in order to check for voicemail messages stored in a conventional voicemail system. Placing such a burden on the subscriber is not desirable.

Thus, there exists a need to accommodate communications between handsets utilizing multimedia messaging and legacy handsets not enabled for MMS operation, and to better integrate access to conventional voicemail systems by MMS handsets.

In European patent application EP 1139677 is described for the transfer of an audio message to a mobile station. A call to a destination mobile station that does not answer is routed to a systems that stores a voice message. At a later time selected to minimize peak traffic loading, the stored voice message converted into an e-mail that is transmitted to the destination mobile station.

In the published patent application WO 02/063838, a method is provided for sending messages from an NMS System. If a second subscriber device is not connected to an MMS-enabled system, an MMS message originated from a first subscriber device in an MMS-enabled system is converted before being forwarded to the second subscriber.

### SUMMARY OF THE INVENTION

A method and apparatus according to the present invention are set out in the independent claims, to which the reader is now referred. Preferred features are laid out in the dependent claims.

The present invention achieves an inventive step by providing an MMS enabled unified messaging system and corresponding method that facilitates communications between handsets utilizing multimedia messaging and legacy handsets not enabled for MMS operation.

A further inventive step is accomplished by the MMS enabled unified messaging system and corresponding method that facilitates access to conventional voicemail systems by MMS handsets and access to multimedia messages stored in a mailbox by non-MMS enabled handsets.

In accordance with an embodiment of the present invention, a method delivers a non-multimedia message to a multimedia messaging service, MMS, enabled handset. The non-multimedia message is received and stored at a message server in a mailbox assigned to a recipient of the non-multimedia message. A determination is made if the recipient utilizes an MMS enabled handset. If the recipient utilizes an MMS enabled handset, a short messaging service, SMS, notification message is generated and transmitted to the recipient's handset, where the notification message communicates to the recipient that a message is awaiting delivery to the recipient. Upon receipt of a deliver message originated by the recipient's handset at the message server, the information contained in the non-multimedia message is transmitted to the recipient utilizing a communication mode supported by the MMS enabled handset of the recipient.

In accordance with another embodiment of the present invention, a method delivers at least a portion of a multimedia message originated by an MMS enabled handset to a non-MMS enabled handset. The multimedia message is received and stored at a message server in a mailbox assigned to a recipient of the multimedia message. A determination is made if the recipient utilizes a handset that can receive SMS messages. If the recipient utilizes an SMS enabled handset, an SMS notification message is generated and transmitted to the recipient's handset, where the notification message communicates to the recipient that a message is awaiting delivery to the recipient. Upon receipt of a call from the recipient at the message server seeking access to the multimedia message awaiting delivery in the recipient's mailbox, at least a portion of the information contained in the multimedia message is transmitted to the recipient utilizing a communication mode supported by the non-MMS enabled handset of the recipient.

Additional embodiments of the present invention also include a message server that supports the above methods.

### Brief Description of the Drawings

Figure 1 is a block diagram of a telecommunication network that incorporates an embodiment of the present invention.
Figure 2 is a block diagram of the unified messaging server with multimedia services as shown in figure 1.
Figures 3 and 4 together comprise a flow diagram illustrating an exemplary method in accordance with the present invention in which the originating subscriber is not MMS enabled and the destination subscriber is MMS enabled.
Figures 5 and 6 together comprise a flow diagram illustrating an exemplary method in accordance with the present invention in which the originating subscriber is MMS enabled and the destination subscriber is not MMS enabled.

### Detailed Description

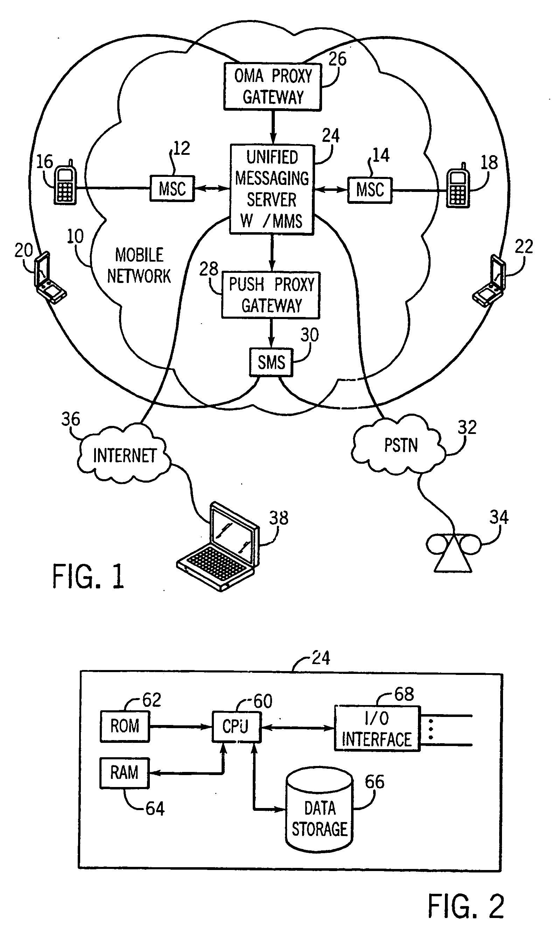

Figure 1 shows an exemplary telecommunications system that supports a variety of wired and wireless end-user devices. The illustrative mobile network 10 includes mobile switching centers (MSC) 12 and 14 that support legacy TUI handsets 16 and 18, respectively. These handsets may comprise conventional cellular telephone handsets that do not support MMS. Third generation wireless handsets 20 and 22 are also supported by the mobile network 10 and are enabled with MMS capability. Radio access networks (not shown) provide a wireless communication link between the handsets and the mobile network elements. Wireless communication paths connecting handsets 16, 18, 20 and 22 with elements in mobile network 10 are shown and will be explained in the examples described below.

Mobile network 10 includes a unified messaging server 24 with enhanced MMS functionality that may comprise an AnyPath Unified Messaging Server available from Lucent Technologies Inc. that is modified as explained below to incorporate MMS functionality. An open mobility alliance (OMA) and wireless access protocol (WAP) proxy gateway 26 is used to send and receive multimedia messages between server 24 and the radio access networks that provide wireless communication links with the mobile handsets. A push proxy gateway 28 is used to perform protocol conversions of multimedia message notifications between server 24 and the short message service (SMS) server 30. An SMS message transmitted by the SMS server 30 is used to notify a MMS enabled mobile handset that a multimedia message is awaiting delivery to the handset. Elements 26, 28 and 30 have defined functionalities and protocols as explained in standards set by 3GPP, 3GPP2, and the OMA organizations defining standards for MMS. A conventional MMS server is also defined by the standard-setting organizations for receiving, storing, and controlling the delivery of multimedia messages between MMS enabled handsets.

A portion of the public switched telephone network (PSTN) 32 that supports a conventional wireline telephone 34 is coupled to unified messaging server 24. A portion of the Internet 36 supports a communication terminal 38 and is coupled to the unified messaging server 24.
The communication terminal 38 is intended to represent various types of communication devices such as a personal computer connected by wireline or wireless modem to the Internet or a personal digital assistant enabled for Internet communications. In an alternative arrangement, the communication terminal 38 may comprise a wireless communication device capable of direct communications with a radio access network associated with the mobile network 10.

Figure 2 is a block diagram of the exemplary unified messaging server 24. A microprocessor or central processing unit (CPU) 60 executes instructions based on a stored program. The CPU 60 is supported by instructions and data stored in read-only memory (ROM) 62 and information read from and written to random access memory (RAM) 64. Data storage device 66 provides nonvolatile storage of data including digitized information representing voicemail and other types of messages that are written to and read from the storage device by CPU 60. An input/output (I/O) interface device 68 is coupled to CPU 60 and enables messages and data to be communicated between the CPU 60 of server 24 and other devices connected to the server.

In the exemplary embodiment, server 24 consists of an AnyPath Unified Messaging Server that has been modified to include MMS functionality. A conventional AnyPath Server, which does not support MMS functionality, provides unified messaging services for wireline subscribers, conventional cellular wireless subscribers, and Internet subscribers. "Unified" messaging service refers to the ability of the server to store information directed to a subscriber from a variety of originating sources such as e-mail, facsimile and voicemail generated from wireline and wireless telephones. Unified messaging service also permits the destination subscriber to access and retrieve the different types of stored messages by Internet access or a telephone call. For example, the destination subscriber can access his "mailbox" by logging into his account by TCP/IP and retrieve or direct stored messages to be transmitted to him. E-mail messages can be directly displayed to the subscriber since the subscriber is utilizing the Internet as the access mode. The subscriber can request voicemail messages to be played over the speaker of the subscriber's personal computer or to be played over a conventional telephone call placed by the server to a telephone number accessible by the subscriber. Facsimile messages can be forwarded to the subscriber as an attachment to e-mail originated from the server to the subscriber, retransmitted over a conventional telephone call placed by the server to a facsimile machine accessible by the subscriber, or converted into text and displayed on the subscriber's screen for viewing.

The following description emphasizes different steps and actions required to be taken by the modified AnyPath Server to provide MMS capabilities and functions. These steps and actions will be described in combination with examples of MMS enabled handsets communicating with handsets that are not MMS enabled via server 24.

### Example 1: Voice Message from Non-MMS Handset to MMS Handset

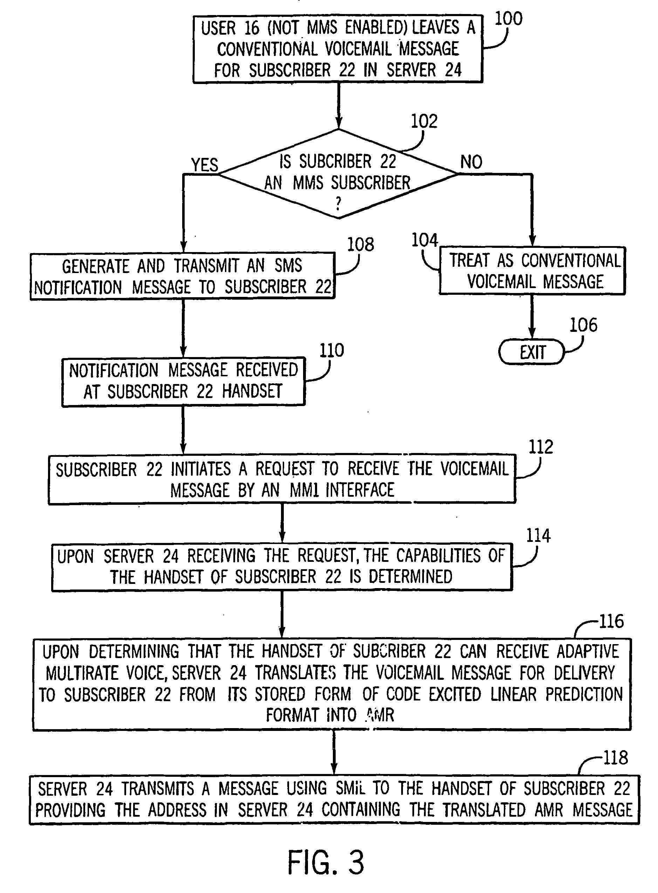

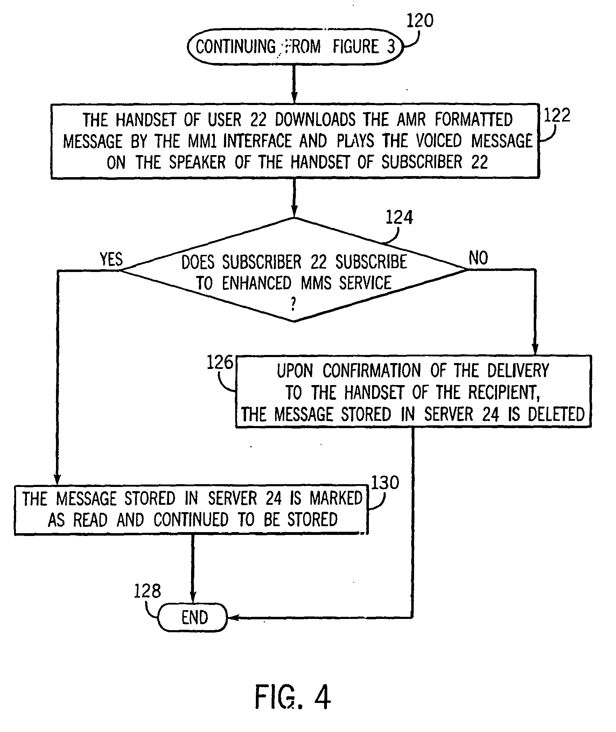

Figures 3 and 4 illustrate an exemplary method in accordance with the present invention in which a user of handset 16 that is not MMS enabled can have a conventional voicemail message delivered to the user of handset 22 utilizing its MMS capabilities. Although both the user of a handset and the handset itself will be referred to by the same reference numeral, it will be apparent from the context which is intended. In step 100 user 16 utilizes a handset not enabled for MMS, such as a second generation cellular telephone, to leave a conventional voicemail message in server 24 for subscriber 22. As seen in figure 1, subscriber 16 utilizes the MSC 12 that has a circuit switch interface with the unified messaging server 24. The voicemail message for subscriber 22 can occur as a result of a call placed by subscriber 16 being routed to server 24 that functions in a call answering mode on behalf of subscriber 22. Upon the voicemail message having been left for subscriber 22, a determination in step 102 is made by server 24 of whether subscriber 22 is an MMS enabled subscriber. The server 24 maintains or has access to a subscriber database containing a record for each subscriber that defines attributes of the subscriber's handset and subscribed to services. A NO determination by step 102 results in server 24 providing conventional voicemail treatment for the message left for subscriber 22. That is, the voicemail message will be stored in server 24 and made available for access by subscriber 22 when the latter chooses to check for voicemail messages. The process for this branch ends at Exit 106.

A YES determination by step 102, indicating that subscriber 22 is an MMS enabled subscriber, results in server 24 generating a notification signal transmitted by gateway 28 to SMS server 30 causing the transmission of an SMS notification message to subscriber 22 at step 108. The notification message is received at the handset of subscriber 22 in step 110. The notification message may consist of a text message that indicates that there is a voicemail message awaiting delivery to subscriber 22 and preferably includes additional information that is specific to the particular voicemail message such as identification of the party leaving the message, header information if available, etc. In step 112 subscriber 22 initiates a request, such as by highlighting the notification message and pressing the SEND button on handset 22, to receive the voicemail message. Since the handset of subscriber 22 is MMS enabled, the handset responds by establishing a communication link with server 24 by proxy gateway 26 using a standards defined interface known as MM1. Upon establishing this communication link, server 24 receives the request from subscriber 22 for delivery of the specified message and determines in step 114 the capabilities of the handset of subscriber 22. As explained above, server 24 maintains or has access to subscriber records stored in a database that includes capabilities and attributes of the subscriber's handset.

In step 116 the server 24 determines that the handset of subscriber 22 can receive voiced information as adaptive multirate (AMR) voice messages. Although 3GPP-based (GSM) MMS systems use AMR, 3GPP2-based (CDMA) MMS systems use QCELP (13k) encoding. The unified messaging server performs transcoding for handsets that do not support both types of encoding to permit inter-working between the different encoding techniques. AMR encoding is assumed the following examples, but QCELP could also be utilized. The server translates the voicemail message for delivery to subscriber 22 from its stored form of code excited linear prediction (CELP) format into AMR format and temporarily stores the reformatted information. In step 118 server 24 transmits a message using synchronized multimedia integration language (SMIL) to the handset 22 providing an address and/or location of the reformatted AMR message at server 24.

Figure 4 continues from step 118 of figure 3 as indicated at step 120. In step 122 the handset 22 downloads the reformatted AMR message from user 16 using the MM1 interface with gateway 26. The handset 22 translates the downloaded AMR message into analog sound signals that are played over its speaker to the user. In step 124 the server 24 makes a decision of whether subscriber 22 subscribes to enhanced MMS service. A NO determination results in the server 24 deleting the stored message upon confirmation of the delivery of the message to the handset of subscriber 22 as indicated at step 126. The process terminates at End 128. A YES determination by step 124, i.e. subscriber 22 does subscribe to enhanced MMS services, results in server 24 continuing to store the voicemail message and marking it as having been read. This enhanced service permits subscriber 22 to later access the stored message if needed. The process terminates at End 128.

The above example demonstrates that a non-MMS enabled subscriber can utilize the voicemail services provided by the MMS enabled unified messaging server 24 to have a voice message communicated to an MMS enabled subscriber in a timeframe that simulates an MMS to MMS voice message transmission. This affords so-called "legacy" handset users the ability for improved communications with later generation handset users.

### Example 2: Multimedia Message from MMS Handset to Non-MMS Handset

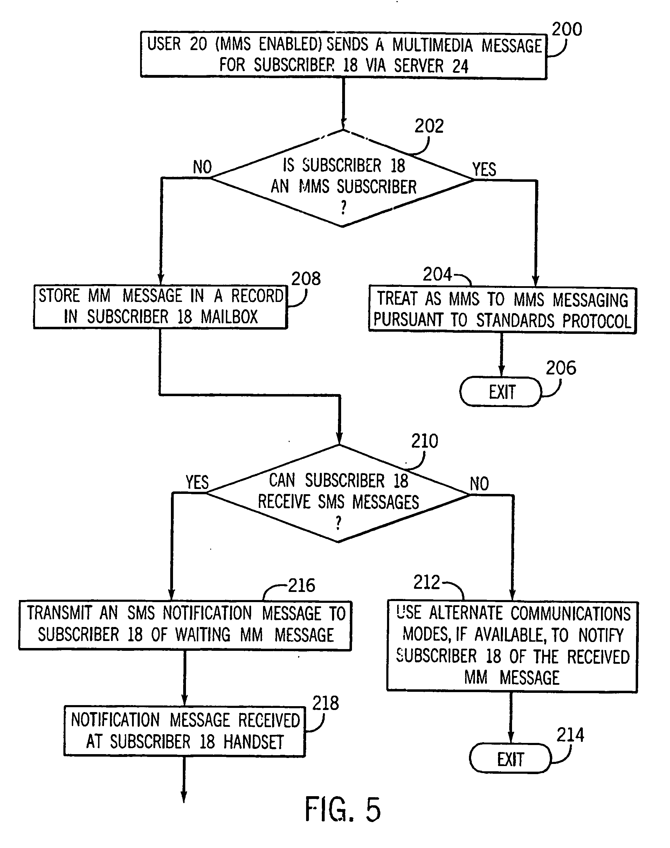

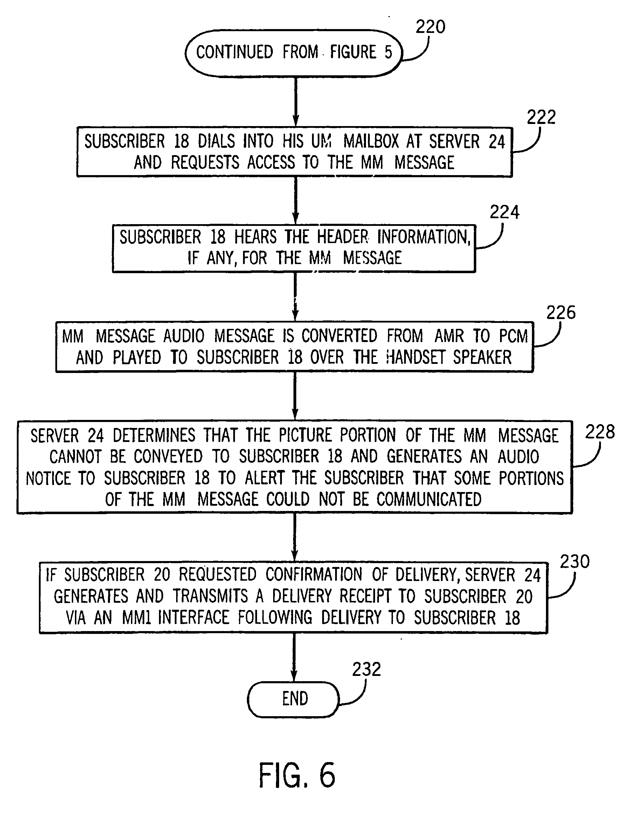

Figures 5 and 6 illustrate a further exemplary method in accordance with the present invention in which a user of handset 20 that is MMS enabled can transmit a multimedia message for delivery to user 18 whose handset is non-MMS enabled. In step 200 user 20, utilizing and MMS enabled handset, transmits a multimedia message to server 24 addressed for subscriber 18. The multimedia message consists of a picture of a new car just purchased by user 20 and a short audio message, "Hello John, how do you like my new car?". The multimedia message is transmitted over a wireless communication link using an MM1 interface between handset 20 and proxy gateway 26 for handling by server 24. In step 202 server 24 determines whether subscriber 18 is an MMS subscriber. As explained above, server 24 maintains or has access to information in a database about the attributes and functions supported by a user's handset and services subscribed to by the user. A YES determination by step 202 results in the multimedia message being treated as MMS to MMS messaging pursuant to standards protocol as indicated in step 204. This process then ends at Exit 206. That is, MMS protocols can be utilized for the delivery of the MMS message if the destination subscriber utilizes an MMS enabled handset.

A NO determination by step 202, indicating that subscriber 18 is not an MMS subscriber, causes the multimedia message to be stored as a record (received message) in the mailbox of subscriber 18 at server 24. The determination is made in step 210 of whether subscriber 18 can receive SMS messages. A NO determination results in an attempt to use alternative communication modes, if available, to notify subscriber 18 that a multimedia message has been received and is awaiting delivery as indicated that step 212. This process ends at Exit 214. If alternate communication modes are not available, the multimedia message will be stored similar to a conventional voicemail message and await an inquiry by subscriber 18 seeking access to stored messages.

A YES determination by step 210 results in server 24 causing an SMS notification message to be transmitted to subscriber 18 advising the subscriber of the waiting multimedia message at step 216. In step 218 the SMS notification message is received and displayed on the screen of the handset of subscriber 18. The notification message may consist of a text message that indicates that there is a message awaiting delivery to subscriber 18 and preferably includes additional information that is specific to the particular message such as identification of the party leaving the message, header information if available, identification of the message as a MM message, etc.

Figure 6 continues from step 218 of figure 5 as indicated at step 220. In step 222 subscriber 18 initiates a conventional wireless telephone call to his mailbox at server 24 upon receiving the SMS notification message and requests access to the multimedia message. For example, subscriber 18 may use conventional DTMF signaling to indicate to the messaging server the message to be played to the subscriber upon hearing an automated voice announcement that identifies messages awaiting delivery. After having identified a message to be played, in step 224 subscriber 18 hears the header information, if any, associated with the multimedia message. If header information exists in other than a voice format, e.g. ASCII text, it will be preferably converted at server 24 by text-to-speech conversion and played to the subscriber. In step 226 the audio message portion of the multimedia message is converted by server 24 from AMR format to pulse code modulation (PCM) format and transmitted to subscriber 18 where it is a played over the handset speaker. In step 228 server 24 determines that the picture portion of the multimedia message cannot be conveyed to subscriber 18 and generates an automated audio notice to subscriber 18 as an alert that some portion of the original multimedia message could not be communicated. Preferably, the automated notice will identify the information type that could not be conveyed, e.g. picture, video, facsimile, etc. If subscriber 20 requested confirmation of delivery, server 24 will generate and transmit a delivery receipt to subscriber 20 by the MM1 interface between handset 20 and proxy gateway 26 following the message having been accessed by subscriber 18. The process terminates at End 232.

Example 2 demonstrates that a non-MMS subscriber can be alerted that a multimedia message was received in the subscriber's mailbox in the MMS enabled unified messaging server and that portions of the multimedia message can be conveyed to the non-MMS subscriber depending on the modes of communication utilized in the multimedia message and the capabilities of the receiving handset. This provides MMS subscribers with the capability of at least limited communications using multimedia messages with non-MMS users.

Although embodiments of the present invention have been described above and shown in the drawings, the scope of the invention is defined by the claims that follow.

## Claims

1. A method for delivering a conventional voice mail message from an originating subscriber's handset (16) that is not enabled for multimedia messaging service, MMS,to a recipient subscriber (22) having a handset enabled for MMS including receiving and storing the voice mail message (100) at a message server in a mailbox assigned to a recipient of the voice mail message, the method **characterized by**:
determining by the message server (102) if the recipient utilizes an MMS enabled handset;
if the recipient utilizes an MMS enabled handset, causing a short messaging service, SMS, notification message to be generated and transmitted to the recipient's handset (108), the notification message communicating to the recipient that a voice mail message is awaiting delivery to the recipient;
upon receipt of a deliver message originated by the recipient's handset at the message server (112), transmitting the voice information contained in the voice mail message to the recipient utilizing a communication mode supported by the MMS enabled handset of the recipient (116-122).

2. The method according to claim 1 wherein the method comprises further steps of storing at the message server the conventional voicemail message as data utilizing a first digital format and translating the voicemail message from the first digital format into another format compatible with the communication mode supported by the MMS enabled handset of the recipient (116).

3. The method according to claim 1 wherein the step of determining if the recipient utilizes an MMS enabled handset comprises querying and receiving a reply from a database by the message server where the database contains information of the communication modes supported by subscriber handset.

4. The method of claim 2 further comprising transmitting (118) a first message from the message server to the recipient's handset where the first message contains an address that contains the translated data.

5. The method of claim 4 further comprising downloading (122) the translated data by the recipient's handset as a data file, and then converting (122) the downloaded translated data into audible output by the recipient's handset, thus allowing the conventional voice mail to be heard by the recipient using an MMS enabled handset.

6. A message server (24) that supports the deliver of a conventional voice mail message to a multimedia messaging service, MMS, enabled handset (22), the message server including means (60, 68, 66) for receiving and storing the voice mail message in a mailbox assigned to a recipient of the voice mail message, the message server **characterized by**:
means (60, 66) for determining if the recipient utilizes an MMS enabled handset;
means (60) for causing a short messaging service, SMS, notification message to be generated and transmitted to the recipient's handset if the recipient utilizes an MMS enabled handset, the notification message communicating to the recipient that voice mail is awaiting delivery to the recipient;
means (60) for transmitting the information contained in the voice mail message to the recipient utilizing a communication mode supported by the MMS enabled handset of the recipient upon receipt of a deliver message originated by the recipient's handset.

7. The message server according to claim 6 wherein the message server comprises means (66) for storing the conventional voicemail message as data utilizing a first digital format and translating (60) the voicemail message from the first digital format into another format compatible with the communication mode supported by the MMS enabled handset of the recipient.

8. The message server according to claim 6 wherein the means for determining if the recipient utilizes an MMS enabled handset comprises a database (66) that contains information of the communication modes supported by subscriber handsets, and means (60) for querying and receiving a reply from the database by the message server.

9. The message server of claim 7 further comprising means for transmitting (60, 68)) a first message from the message server to the recipient's handset where the first message contains an address that contains the translated data.

10. The message server of claim 9 further comprising means for transmitting (60, 68) a download of the translated data to the recipient's handset as a data file, so that the recipient's handset can then convert the downloaded translated data into audible output by the recipient's handset, thus allowing the conventional voice mail to be heard by the recipient using an MMS enabled handset.

## Patentansprüche

1. Verfahren zum Abliefern einer herkömmlichen Voice-Mail-Nachricht von dem Handapparat (16) eines Ursprungsteilnehmers, der nicht für Multimedia-Nachrichtenübermittlungsdienst MMS freigegeben ist, zu einem Empfängerteilnehmer (22) mit einem Handapparat, der für MMS freigegeben ist, mit den Schritten des Empfangens und Speicherns der Voice-Mail-Nachricht (100) in dem Nachrichten-Server in einer einem Empfänger der Voice-Mail-Nachricht zugewiesenen Mailbox, wobei das Verfahren durch die folgenden Schritte **gekennzeichnet** ist:
der Nachrichten-Server bestimmt (102), ob der Empfänger einen MMS-freigegebenen Handapparat benutzt;
wenn der Empfänger einen MMS-freigegebenen Handapparat benutzt, Bewirken, daß eine Benachrichtigungsnachricht des Kurznachrichtendienstes SMS erzeugt und zu dem Handapparat (108) des Empfängers gesendet wird, wobei die Benachrichtigungsnachricht dem Empfänger mitteilt, daß eine Voice-Mail-Nachricht darauf wartet, an den Empfänger abgeliefert zu werden;
nach Empfang einer Abliefernachricht mit Ursprung in dem Handapparat des Empfängers in dem Nachrichtenserver (112), Senden der in der Voice-Mail-Nachricht enthaltenen Voice-Informationen zu dem Empfänger unter Verwendung eines durch den MMS-freigegebenen Handapparat des Empfängers (116-122) Kommunikationsmodus.

2. Verfahren nach Anspruch 1, wobei das Verfahren ferner Schritte des Speicherns der herkömmlichen Voice-Mail-Nachricht in dem Nachrichtenserver als Daten unter Verwendung eines ersten digitalen Formats und des Übersetzens der Voice-Mail-Nachricht aus dem ersten digitalen Format in ein mit dem durch den MMS-freigegebenen Handapparat des Empfängers (116-122) unterstützten Kommunikationsmodus kompatibles anderes Format.

3. Verfahren nach Anspruch 1, wobei der Schritt des Bestimmens, ob der Empfänger einen MMS-freigegebenen Handapparat benutzt, umfaßt, daß der Nachrichtenserver eine Datenbank abfragt und eine Antwort von ihr erhält, wobei die Datenbank Informationen über die von dem Teilnehmerhandapparat unterstüzten Kommunikationmodi enthält.

4. Verfahren nach Anspruch 2, ferner mit dem Schritt des Sendens (118) einer ersten Nachricht von dem Nachrichtenserver zu dem Handapparat des Empfängers, wobei die erste Nachricht eine Adresse enthält, die die übersetzten Daten enthält.

5. Verfahren nach Anspruch 2, ferner mit dem Schritt des Herunterladens (122) der übersetzten Daten durch den Handapparat des Empfängers als eine Datei und des anschließenden Umsetzens (122) der heruntergeladenen übersetzten Daten in eine hörbare Ausgabe durch den Handapparat des Empfängers, wodurch ein Hören der herkömmlichen Voice-Mail-Nachricht durch den Empfänger unter Verwendung eines MMS-freigegebenen Handapparats ermöglicht wird.

6. Nachrichtenserver (24), der das Abliefern einer herkömmlichen Voice-Mail-Nachricht an einen für den Multimedia-Nachrichtenübermittlungsdienst MMS freigegebenen Handapparat (22) unterstützt, wobei der Nachrichtenserver Mittel (60, 68, 66) zum Empfangen und Speichern der Voice-Mail-Nachricht in einer einem Empfänger der Voice-Mail-Nachricht zugewiesenen Mailbox enthält, wobei der Nachrichtenserver durch folgendes **gekennzeichnet** ist:
Mittel (60, 66) zum Bestimmen, ob der Empfänger einen MMS-freigegebenen Handapparat benutzt;
Mittel (60) zum Bewirken, daß eine Benachrichtigungsnachricht des Kurznachrichtendienstes SMS erzeugt und zu dem Handapparat des Empfängers gesendet wird, wenn der Empfänger einen MMS-freigegebenen Handapparat benutzt, wobei die Benachrichtigungsnachricht dem Empfänger mitteilt, daß eine Voice-Mail-Nachricht darauf wartet, an den Empfänger abgeliefert zu werden;
Mittel (60) zum Senden der in der Voice-Mail-Nachricht enthaltenen Voice-Informationen zu dem Empfänger unter Verwendung eines durch den MMS-freigegebenen Handapparat des Empfängers (116-122) unterstützten Kommunikationsmodus nach Empfang einer Abliefernachricht mit Ursprung in dem Handapparat des Empfängers in dem Nachrichtenserver.

7. Nachrichtenserver nach Anspruch 6, wobei der Nachrichtenserver Mittel (66) zum Speichern der herkömmlichen Voice-Mail-Nachricht als Daten unter Verwendung eines ersten digitalen Formats und zum Übersetzen (60) der Voice-Mail-Nachricht aus dem ersten digitalen Format in ein mit dem durch den MMS-freigegebenen Handapparat des Empfängers unterstützten Kommunikationsmodus kompatibles anderes Format umfaßt.

8. Nachrichtenserver nach Anspruch 6, wobei die Mittel zum Bestimmen, ob der Empfänger einen MMS-freigegebenen Handapparat benutzt, eine Datenbank (66), die Informationen über die von dem Teilnehmerhandapparat unterstüzten Kommunikationmodi enthält, und Mittel (60) zum Abfragen der Datenbank und Empfangen einer Antwort von ihr umfassen.

9. Nachrichtenserver nach Anspruch 7, ferner mit Mitteln zum Senden (60, 68) einer ersten Nachricht von dem Nachrichtenserver zu dem Handapparat des Empfängers, wobei die erste Nachricht eine Adresse enthält, die die übersetzten Daten enthält.

10. Nachrichtenserver nach Anspruch 9, ferner mit Mitteln zum Senden (60, 68) eines Downloads der übersetzten Daten zum dem Handapparat des Empfängers als eine Datei, so daß der Handapparat des Empfängers anschließend die heruntergeladenen übersetzten Daten in eine hörbare Ausgabe durch den Handapparat des Empfängers umsetzen kann, wodurch ein Hören der herkömmlichen Voice-Mail-Nachricht durch den Empfänger unter Verwendung eines MMS-freigegebenen Handapparats ermöglicht wird.

## Revendications

1. Procédé pour acheminer un message de courrier vocal conventionnel d'un combiné d'un abonné d'origine (16) qui n'est pas habilité pour un service de messagerie multimédia, MMS, à un abonné destinataire (22) ayant un combiné habilité pour MMS comprenant la réception et le stockage du message de courrier vocal (100) au niveau d'un serveur de messages dans une boite vocale attribuée à un destinataire du message de courrier vocal, le procédé étant **caractérisé par** :
la détermination par le serveur de messages (102) de l'utilisation d'un combiné habilité MMS par le destinataire ;
si le destinataire utilise un combiné habilité MMS, le déclenchement de la génération et la transmission d'un message de notification de service de messages courts, SMS, au combiné du destinataire (108), le message de notification communiquant au destinataire qu'un message de courrier vocal attend pour un acheminement au destinataire ;
dès réception d'un message d'acheminement émis par le combiné du destinataire au niveau du serveur de messages (112), la transmission des informations vocales contenues dans le message de courrier vocal au destinataire utilisant un mode de communication pris en charge par le combiné habilité MMS du destinataire (116 à 122).

2. Procédé selon la revendication 1 dans lequel le procédé comprend des étapes supplémentaires de stockage au niveau du serveur de messages du message de courrier vocal conventionnel en tant que données utilisant un premier format numérique et de traduction du message de courrier vocal du premier format numérique en un autre format compatible avec le mode de communication pris en charge par le combiné habilité MMS du destinataire (116).

3. Procédé selon la revendication 1 dans lequel l'étape de détermination de l'utilisation d'un combiné habilité MMS par le destinataire comprend l'interrogation et la réception d'une réponse provenant d'une base de données par le serveur de messages où la base de données contient des informations des modes de communication pris en charge par le combiné de l'abonné.

4. Procédé selon la revendication 2 comprenant en outre la transmission (118) d'un premier message du serveur de messages au combiné du destinataire où le premier message contient une adresse qui contient les données traduites.

5. Procédé selon la revendication 4 comprenant en outre le téléchargement (122) des données traduites par le combiné du destinataire en tant que fichier de données, et ensuite la conversion (122) des données traduites téléchargées en une sortie audible par le combiné du destinataire, permettant ainsi au courrier vocal conventionnel d'être entendu par le destinataire utilisant un combiné habilité MMS.

6. Serveur de messages (24) qui prend en charge l'acheminement d'un message de courrier vocal conventionnel à un combiné (22) habilité pour un service de messagerie multimédia, MMS, le serveur de messages comprenant des moyens (60, 68, 66) pour recevoir et stocker le message de courrier vocal dans une boite vocale attribuée à un destinataire du message de courrier vocal, le serveur de messages étant **caractérisé par** :
des moyens (60, 66) de détermination de l'utilisation d'un combiné habilité MMS par le destinataire ;
des moyens (60) de déclenchement de la génération et la transmission d'un message de notification de service de messages courts, SMS, au combiné du destinataire si le destinataire utilise un combiné habilité MMS, le message de notification communiquant au destinataire qu'un courrier vocal attend pour un acheminement au destinataire ;
des moyens (60) de transmission des informations contenues dans le message de courrier vocal au destinataire utilisant un mode de communication pris en charge par le combiné habilité MMS du destinataire dès réception d'un message d'acheminement émis par le combiné du destinataire.

7. Serveur de messages selon la revendication 6 dans lequel le serveur de messages comprend des moyens (66) de stockage du message de courrier vocal conventionnel en tant que données utilisant un premier format numérique et de traduction (60) du message de courrier vocal du premier format numérique en un autre format compatible avec le mode de communication pris en charge par le combiné habilité MMS du destinataire.

8. Serveur de messages selon la revendication 6 dans lequel les moyens de détermination de l'utilisation d'un combiné habilité MMS par le destinataire comprend une base de données (66) qui contient des informations des modes de communication pris en charge par des combinés d'abonnés, et des moyens (60) d'interrogation et de réception d'une réponse provenant d'une base de données par le serveur de messages.

9. Serveur de messages selon la revendication 7 comprenant en outre des moyens de transmission (60, 68) d'un premier message du serveur de messages au combiné du destinataire où le premier message contient une adresse qui contient les données traduites.

10. Serveur de messages selon la revendication 9 comprenant en outre des moyens de transmission (60, 68) d'un téléchargement des données traduites au combiné du destinataire en tant que fichier de données, de sorte que le combiné du destinataire peut ensuite convertir les données traduites téléchargées en une sortie audible par le combiné du destinataire, permettant ainsi au courrier vocal conventionnel d'être entendu par le destinataire utilisant un combiné habilité MMS.
